# EUROPEAN PATENT SPECIFICATION

(11) **EP 2 864 077 B1**
(45) Date of publication and mention of the grant of the patent: **18.10.2023**
(21) Application number: 13806806.9
(22) Date of filing: 24.06.2013
(51) Int. Cl.: B23K 26/046, B23K 26/06, B23K 26/0622, B23K 26/382, B23K 101/00

(54) **LASER DRILLING METHOD AND SYSTEM FOR PRODUCING SHAPED HOLES**
LASERBOHRVERFAHREN UND SYSTEM ZUR HERSTELLUNG VON PROFILIERTEN LÖCHERN
PROCÉDÉ DE PERÇAGE AU LASER ET SYSTÈME DE PRODUCTION DE TROUS PROFILÉS

(30) Priority: 22.06.2012 US 201261663267 P
(43) Date of publication of application: 29.04.2015
(73) Proprietor: IPG Photonics Corporation, Oxford, Massachusetts 01540 (US)
(72) Inventor: SHINER, William, Oxford, MA 01540 (US); MAYNARD, Steve, Oxford, MA 01540 (US)
(74) Representative: Kobiako von Gamm, Iouri
(86) International application number: PCT/US2013/047319
(87) International publication number: WO 2013/192612

(56) References cited:
- WO-A1-2012/067228
- DE-T2- 69 424 606
- JP-A- H11 197 871
- JP-A- H11 347 766
- KR-A- 20100 136 473
- KR-B1- 860 000 128
- US-A- 5 593 606
- US-A- 5 739 502
- US-A1- 2003 127 438
- US-A1- 2010 282 721

## Description

### Field of the Disclosure

This disclosure relates to a process and system for mass production of shaped holes in a workpiece, and more particularly, to an improved method of forming shaped cooling holes by way of fiber laser machining of metal components.

### Prior Art

Proper design of cooling components with shaped holes, properly put into practice, results in a more efficient and cost effective airfoils, turbine engines and other components. The specific interest in laser processing comes from its speed relative to competitive methods and the ability to produce shaped holes in parts with thermal barrier coatings (TBC). Hence the drilling of shaped cooling holes has become standard practice in the manufacture of modem jet engines and other components.

A shaped hole is configured with diffuser and metering sections. The diffuser, the hole's downstream portion along a path of gas medium, is the non-circular section that contains the "shape". It is configured to spread, or diffuse, a film of air over the part surface. The metering section refers to the cylindrical, input portion of the hole. Mainly two methods are used for producing shaped holes: percussion process and trepan laser drilling process.

The percussion method utilizes the laser beam focused to a diameter approximately equal to the required hole diameter. The laser is focused on the surface of the stationary material and a series of laser pulses is fired at the material, each one removing material by melt expulsion, until a uniformly configured hole is created through the material. The initial stage is followed by the electrical discharge machining (EDM) to produce the diffuser shape. This process, while producing precisely desired shapes, is time consuming and therefore cost-ineffective.

The trepan drilling is realized with the laser beam focused to a diameter that is smaller than the required hole diameter. The material is first pierced with a small pilot hole, usually in the center of the required hole diameter. A circular, orbiting motion is then applied, either to the laser beam or the component to cut the hole to the required diameter, and then trepan a diffuser portion with the same or different laser. The metering hole can be drilled very rapidly, where as the diffuser shape can take 30 seconds or more to produce. This method, like the percussion drilling, is time consuming which is particularly undesirable when thousands and thousands of cooling holes are provided in the surface of components, such as airplane turbines, combustors, airfoils and the like.

Relevant background art can be found for example in the method disclosed in US 5 739 502 A, which forms a pilot hole using a laser beam having a conical shape and at least part of the pilot hole is enlarged by using a laser beam having a pyramidal shape. The holes have a first, upstream region of cylindrical shape, and a second, downstream diffusing region of pyramidal shape.

Further, US 2010/282721 A1 discloses a trench producing system and method for providing film cooling in an airfoil and has control subsystem for synchronizing position of sample with pulse duration and energy level for removing thermal barrier coating, bondcoat and substrate metal in sample.

In addition, US 2003/127438 A1 discloses a method of making an opening containing a non-cylindrical funnel section, whereby the opening extends from a first surface to a second surface of a component wall and is formed by a laser beam. Material is removed primarily by sublimation when forming a funnel by selecting the laser parameters and removing layers of essentially constant thickness.

A need, therefore, exists for an improved, cost-efficient laser drilling method of shaped holes.

Another need exists for a laser drilling method of mass producing shaped holes in a very rapid manner from a single fiber laser.

Still another need exists for a laser drilling method of dynamically controlling a position of focal plane and dimensions of diffuser and metering portions before or during laser drilling.

Still a further need exists for a system configured to utilize the disclosed method.

### SUMMARY OF THE DISCLOSURE

This need is met by the method defined by claim 1 and the system defined in claim 11, in general by utilizing a high power, pulsed or quasi-pulsed fiber laser having either a feed fiber from the fiber laser or appropriate passive delivery with a non-circular core emitting radiation in a single mode which has a Gaussian electromagnetic distribution. By utilizing the non-circular core and obtaining the image of the core on the surface of the component, a diffuser shape is produced in one or more pulses. As the beam propagates through the workpiece, with the location of the beam waist corresponding to a focal plane of beam guiding optics, the non-circular cross-section gradually transforms into a circular cross-section so as to form a metering portion with die desired uniform diameter.

According to one aspect of the above-disclosed method, the entire hole is made in a single drilling operation, i.e., with a single laser pulse. Alternatively, a series of short pulses accomplishes this task. A high power fiber laser such as an ytterbium ("Yb") laser is operative to drill a hole from about 1 to about 15 milliseconds.

In a further aspect, the disclosed method provides for controlling both a focal length, thus defining the lengths of respective diffuser and metering portions, and a spot size on the surface of the workpiece to be laser processed. The realization of this aspect includes displacement of collimator components along a common optical axis which results in a simple adjustment of the focal length and spot size. Alternatively, of course, a delivery fiber can be replaced to have the desired core cross-section and a focusing lens is selected to obtain the desired focal length.

In accordance with a further development of the disclosure, an apparatus is configured to carry out the disclosed method in an efficient manner. Including, a 5- or 6-axis system with a high power Yb fiber laser, the apparatus is operative to produce numerous holes each formed in about a 1 to 15 millisecond range and, preferably, but not exclusively, by a single pulse.

One of the aspects of the disclosed apparatus relates to the formation of a rhomboid - shaped beam spot produced by rotating the fiber's rectangular core. The latter is accomplished by a means operative to rotate the fiber about its longitudinal axis as the rectangular beam spot transforms to a rhomboid shape.

In a further aspect, the disclosed apparatus is operative to simultaneously control a beam spot on the surface of the workpiece to be laser processed and focal length of the beam. Adjusting the focal length, the length and diameter of the uniformly cross-sectioned metering hole portion can be easily controlled. Along with the metering portion, a beam spot, defining the dimensions of the diffuser's opening on the surface, is also controlled.

### BRIEF DESCRIPTION OF THE DRAWINGS

The above and other aspects, features and advantages will become more readily apparent from the following specific description of the disclosure accompanied by the drawings, in which:
FIG. 1 illustrates a diagrammatic view of the disclosed apparatus.
FIG. 1A is an elevated end view of one of possible configurations of the fiber used in accordance with the disclosure.
FIG. 2 illustrates a side elevation view of a shaped hole drilled in accordance with the disclosed methods and apparatus.
FIGs. 3A-3C illustrate respective computer-generated views of Gaussian beam profile, beam spot on, and 3-D profile of the Gaussian beam on the surface of the workpiece to be laser processed.
FIGs. 4A-4C illustrate respective computer-generated views of 2-D Gaussian beam profile, beam spot on, and 3-D profile of the Gaussian beam after the location of the beam waist within the workpiece to be laser-processed.
FIG. 5 illustrates top views of respective non-circular diffusers on the beam-entrance surface produced in accordance with the disclosed method and apparatus.
FIG. 6 illustrates bottom views of respective circular metering holes on the beam-exit surface produced in accordance with the disclosed method and apparatus;
FIG. 7 is an isometric view of the shaped hole produced in accordance with the disclosed method and apparatus.
FIGs.8A - 8B illustrate examples of numerous hole patterns produced by the disclosed apparatus and method.

### SPECIFIC DESCRIPTION

The following specific description of the disclosures exemplary in nature and is not intended to limit the disclosed subject matter as defined by the appended claims or the application and uses of the disclosed subject matter as defined by the appended claims.

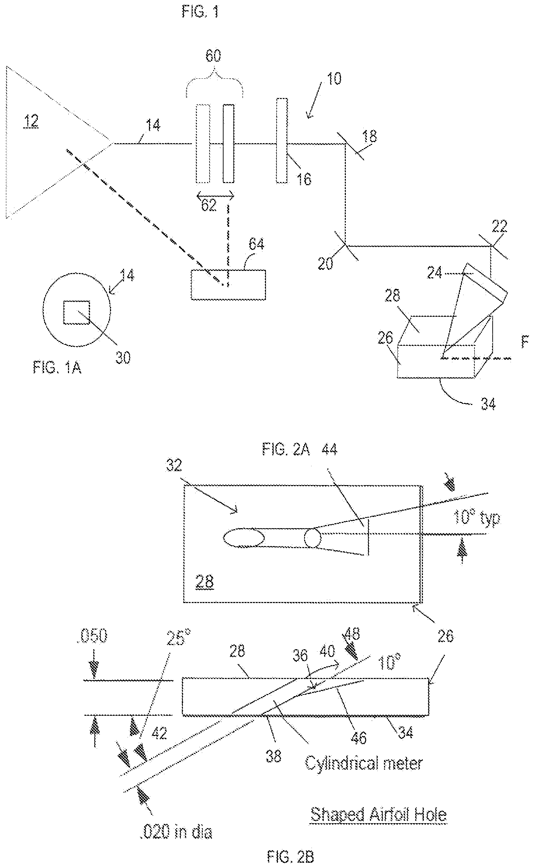

Referring to FIG. 1, a hole drilling assembly 10 includes a high power fiber laser system 12 generating output signal light which is coupled into a passive fiber 14 guiding the signal light along the path towards a collimator 16. The collimated beam is further guided through spaced apart mirrors 18, 20 and 22, respectively to impinge upon a focusing lens 24. The latter trains the beam on an entrance surface 28 of a workpiece 26 at an angle relative to the plane of surface 28 with a focal point F located within the body of the workpiece.

The laser system 12 may have a variety of configurations including, for example, a master oscillator/power amplifier ("MOPA") with one or multiple amplifying cascades typically coupled in series, but sometimes, coupled in parallel to one another. Typically, system 12 is configured as a pulsed system emitting single mode ("SM") signal light in a kW -MW peak power range at a frequency, i.e., pulse repetition rate of up to about 100 Hz. Alternatively, system 12 may be configured as a quasi-pulsed system.

Referring to FIG. 1A, passive fiber 14 has a noncircular core 30, which, as shown only as an example, has a rectangular cross-section, but can have any other regular or irregular polygonal shape including, for example, trapezoidal shape, an oval shape and the like. The core 30 is structured to guide a single mode ("SM") laser beam having a Gaussian distribution of electromagnetic field. As known, energy distribution in a rectangular shaped beam spot, i.e., the flat top image of the core on entrance surface 28 of workpiece 26 of FIG. 1, is more uniform than that of a circular beam. The laser beam may propagate at any desirable wavelength, such as about 1060 nm, and characterized by the desired pulse durations, intensity, and repetition rate to produce a single effusion hole from about 1 to about 15 milliseconds.

FIGs. 2A and 2B show respective top and side views of the desired non-circular shape of an effusion cooling hole 32. The hole 32 extends between opposite entrance and exit surfaces 28 and 34, respectively, of workpiece 26 and includes a diffuser portion 36 and a metering portion 38 with the latter being an inlet of a cooling medium in exit surface 34, but defining a downstream part of the hole along a light path. The surface 28 is subjected to the hot gas passing through, for example, the turbine and needs to be cooled by the cooling medium entering metering portion 38. The cross-section of metering portion 38 is substantially uniformly circular and defines the rate at which cooling medium flows along shaped hole 32. The angle 42 between the symmetry axis of hole 32 and surface 34 is less than 90 degrees and preferably lies in the range 10 to 80 degrees, so as to direct a stream 40 of the cooling medium towards light entrance surface 28 in such a manner that the stream remains as close to entrance surface 28 as possible. In other words, the closer the velocity vectors of stream 40 at the orifice of diffuser portion 36 to surface 28, the more parallel the stream to the plane of surface 28.

In order to direct stream 40 as close to light entrance surface 28 as possible, diffuser 36 flares around an orifice 44 traversed by a cooling medium whet it leaves hole 32. In front of the orifice diffuser portion 36, in the flow direction of cooling medium 40, has a surface 46 sloping in entrance surface 28 at an angle 48 less than angle 42.

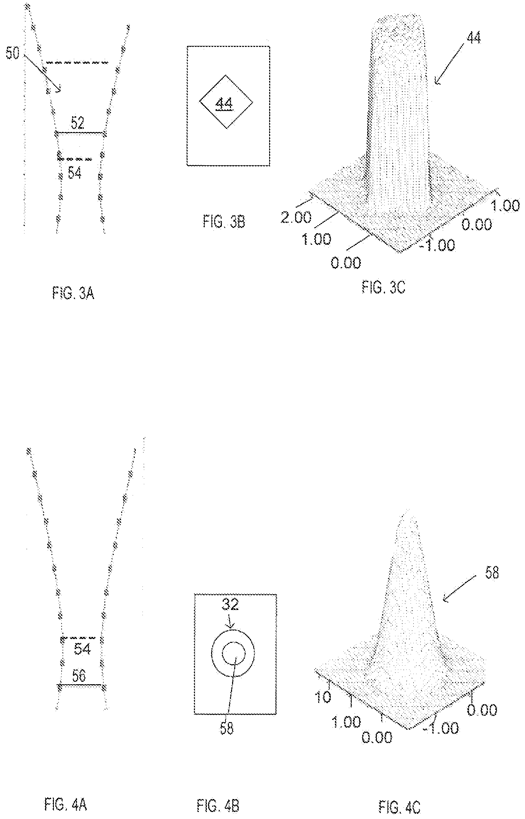

FIGs. 3A-3C illustrate the formation of diffuser portion 36. A Gaussian beam emitted from a non-circular core is not necessarily non-circular when incident on a surface. In fact, only a relatively small portion 50 including line 52 and terminating with a waist 54 forms the desired non-circular shape. Conditionally, this region is further referred to as the near field of the beam and includes waist 54. The optics of the disclosed system is configured so that line 52 corresponding to the non-circular beam spot is formed in the plane of entrance surface 28 so as to form orifice 44 (FIG.3B) having not only the desired non-circular beam spot, but the non-circular spot with the desired dimensions. FIG. 3C shows a flat-top Gaussian beam on entrance surface 28.

FIGs. 4A-4C illustrate the beam's behavior in the far field downstream from waist 54 to line 56. The hole 32, thus, is characterized by a circular cross-section 58 which corresponds to the cross-section of the beam in its far field. The distance between waist 54 and surface 34 (FIG. 2B) defines the desired length and diameter of metering portion 38 of shaped hole 32.

Returning to FIG. 1, differently sized shaped holes are often required to be produced even on the same surface. This can be accomplished by independently controlling the diffuser cross-section on surface 28 with an appropriately selected core size and the focal point F by configuring lens 24 to form focal point F at the desired distance from entrance surface 28.

Alternatively, system 20 can be configured with an optical system operative to simultaneously control both the non-circular beam spot size and focal point F. As shown, a lens assembly 60, including two lenses displaceably fixed relative to one another, is movable along a light path along a double-arrow 62 relative to collimator 16. As assembly 60 approaches lens 16, the beam's diameter and therefore beam spot become smaller with the focal point F located closer to surface 28 of workpiece 26. Reversing the displacement of assembly 60 increases a beam spot while forming the focal point father away from light entrance surface 28. The displacement of assembly 60 is realized by an actuator 64, which, in turn, operates in response to control signals from a central processing unit, not shown in the drawing but well known to one of ordinary skill in the electronic arts.

In a further development of the disclosure, drilling assembly 10 is configured to alter a shape of the beam spot on surface 28 without replacing fiber 14 with rectangular core 30. in particular, rotating fiber 30 about its longitudinal axis transforms a rectangular beam spot to a rhomboid spot, if desired, and conversely.

The following are exemplary parameters used in numerous tests of assembly 10 of FIG. 2.

### Parameter Example #1 - Single Pulse Drilling

| | |
|---|---|
| Peak Power - | 15000W |
| Pulse Duration - | 15 milliseconds |
| # of pulses - | 1 pulse per hole |
| Angle - | 25 degrees from surface |
| Assist gas - | Air @ 75 psi |
| Nozzle standoff - | 30mm |
| Pulse repetition rate - | 45 Hz |

### Parameter Example #2 - Multi-Pulse Drilling

| | |
|---|---|
| Peak Power - | 10000W |
| Pulse Duration - | 1 millisecond |
| Pulse repletion rate- | 25 Hz |
| # of pulses - | 10 pulse per hole |
| Angle - | 25 degrees from surface |
| Assist gas - | Air @ 75 psi |
| Nozzle standoff - | 30mm |

As can be seen from the above disclosed examples, effusion holes may be produced by a single pulse per hole or by multiple pulses. However, the rate at which the holes are produced does not exceed 15 milliseconds per hole and can as short as 1 millisecond and even less. The experiments show that up to a 100 holes per minute can effectively produced.

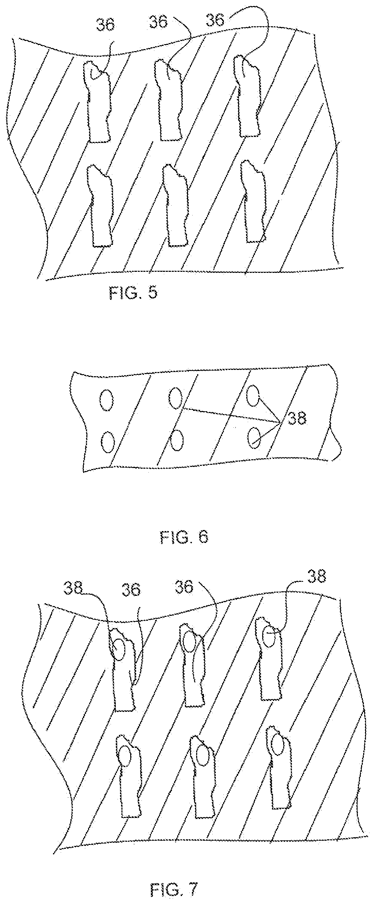

FIGs. 5, 6 and 7, illustrate respective noncircular the orifices of diffuser portions 36, metering portions 38 opening into the exit surface of the workpiece and an isometric view of shaped holes 32. As can be seen, while the shape of diffusers 36 is not perfectly rectangular, it is definitely substantially rectangular which satisfies a majority of industry requirements. The shape of metering portions 38 is fully satisfactory and, as can be seen, is substantially circular.

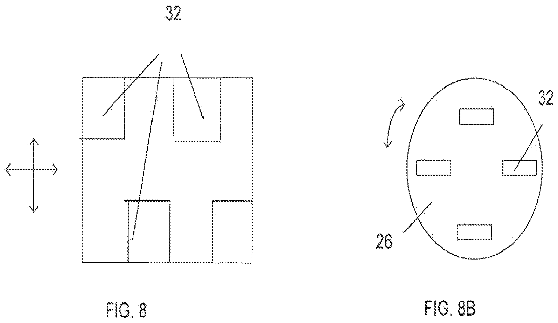

Referring to FIGs. 8A and 8B, using assembly 10 of FIG. 1, a variety of hole patterns can be produced. For example, linearly displacing the workpiece and laser head relative to one another, a variety of non-circular patterns may be obtained, as shown in FIG. 8A. Rotating, preferably, workpiece 26 relative to the laser head, a circular pattern of FIG. 8B can be created. As disclosed above, dimensions of holes 32 may vary from one to another within the same pattern, if desired.

Having described at least one of the preferred embodiments of the present invention with reference to the accompanying drawings, it is to be understood that the invention is not limited to those precise embodiments. Thus various changes, modifications, and adaptations including different patterns, hole dimensions, laser beam parameters and the like may be effected therein by one skilled in the art without departing from the scope as defined by the appended claims.

## Claims

1. A laser drilling method of producing shaped holes (32) in a workpiece (26) utilizing a high power fiber laser comprising the following steps:
emitting a sequence of light beam pulses, each propagating through the workpiece (26) and having a Gaussian beam shape, from a non-circular fiber core (30), wherein the pulses each have a peak power range varying between a kW level to a MW level;
focusing each light beam pulse on the workpiece (26) with a pulse duration from about 1 millisecond to about 15 milliseconds so as to form a desired noncircular beam spot on an entrance surface (28) of the workpiece (26), wherein a waist (54) of the beam is formed at a predetermined distance downstream from the entrance surface (28) within the workpiece (26), thereby forming
a tapered diffuser portion (36) of a shaped hole (32) with a non-circular cross-section (44) between the entrance surface (28) of the workpiece and the waist (28) of the beam, and
a metering portion (38) of the shaped hole (32) formed between the waist (54) of the beam and an exit surface (34) of the workpiece (26),
wherein the metering portion (38) of each shaped hole (32) opens into the exit surface (34) and has a substantially uniform diameter.

2. The laser drilling method of claim 1, wherein the shaped hole (32) is formed in a single pulse drilling operation.

3. The laser drilling method of claim 1, wherein the shaped hole (32) is formed in multiple pulse drilling operations.

4. The laser drilling method of claim 1, further comprising
independently controlling a desired beam spot size and a location of the waist (54) corresponding to a focal plane of beam guiding optics (60, 16, 18, 20, 22, 24).

5. The laser drilling method of claim 1, further comprising
simultaneously controlling a desired beam spot size on the entrance surface (28) and a focal plane of beam guiding optics (60, 16, 18, 20, 22, 24) at predetermined distance from the entrance surface (28).

6. The laser drilling method of claim 5, wherein the simultaneous controlling of the beam spot size and focal plane includes altering dimensions of the beam downstream from the core (30).

7. The laser drilling method of claim 1, further comprising
displacing the workpiece (26) and the core (30) relative to one another, thereby providing a desired pattern of shaped holes (32) in the workpiece (26).

8. The laser drilling method of claim 1, further comprising
rotating the core (30) to transform the non-circular cross-section to a different non-circular cross-section,
wherein one of the noncircular cross-sections is rectangular and the other is rhomboid.

9. The laser drilling method of claim 1, wherein the pulses each are emitted at a peak power reaching a MW, at a repetition rate of up to about 100 Hz and a pulse duration range varying between about 1 millisecond and about 15 milliseconds.

10. The laser drilling method of claim 1, wherein the desired non-circular shape includes an oval cross-section or a polygonal cross-section.

11. A laser drilling assembly (10) adapted to produce shaped holes (32) in a workpiece (26), comprising:
a high power fiber laser system (12) configured to generate light beam pulses each having a pulse duration ranging between about 1 millisecond and 15 milliseconds and a peak power range varying between a kW and a MW level,
a fiber (14) having a non-circular core (30) emitting a plurality of light beam pulses along a path, the light beam pulses each having substantially a Gaussian beam shape; and
an optical system (16, 18, 20, 22, 24) located downstream from the fiber (14) and configured to guide the light beam pulses towards the workpiece (26) so that as the light beam pulses each propagate through the workpiece (26),
the Gaussian beam shape forms a tapered diffuser portion (36) having a non-circular image of the core on an entrance surface (28) of the workpiece (26) and terminating in a focal plane of the optical system (16, 18, 20, 22, 24), while
the Gaussian beam shape forms substantially a circular metering portion (38) of the shaped hole (32) between the focal plane and an exit surface (34) of the workpiece (26) spaced downstream from the focal plane,
wherein the laser drilling assembly is configured to produce the shaped hole (32) at a rate within a range varying from about 1 to about 15 milliseconds, the optical system (16, 18, 20, 22, 24) including
a focusing lens (24) configured to have the focal plane at a desired distance between the entrance (28) and exit surfaces (34), the beams each having a location of a waist (54) of the Gaussian beam shape lying in the focal plane,
a collimator (16) located downstream from core (30), and
a series of spaced reflecting mirrors (18, 20, 22) between collimator (16) and focusing lens (24).

12. The laser drilling assembly of claim 11, further comprising the high power fiber laser system (12) generating the light beam pulses each having a repletion rate of up to about 100 Hz and at a wavelength centered around 1060 nm.

13. The laser drilling assembly of claim 11, wherein the core (30) and the optical system (16, 18, 20, 22, 24) are configured to provide a desired dimension of the image on the entrance surface (28) and a desired location of the focal plane defining a length of the diffuser (36) and metering portions (38) of the shaped hole (32).

14. The drilling assembly of claim 11, wherein the optical system (60, 16, 18, 20, 22, 24) includes a collimator system between the core (30) and the workpiece (26), the collimator system including
two upstream lenses (60) displaceably fixed to one another and
a collimating lens (16) downstream from the two lenses (60),
the two upstream lenses (60) and downstream collimating lens (16) being controllably displaceable relative to one another to adjust the non-circular image to a desired dimension and the focal plane at a desired distance between entrance (28) and exit (34) surfaces.

15. The drilling assembly of claim 14, further comprising
an actuator (64) operatively connected to the lenses (60), and
a controller provided with software operative to determine the desired dimension of the image and location of the focal plane and output a signal to the actuator (64) configured to displace the lenses (60) relative to one another at a desired distance corresponding to the desired dimension of the image and location of the focal plane.

16. The drilling assembly of claim 11, further comprising
an actuator operatively connected to the fiber (14) and configured to rotate the fiber (14) so as to transform the image of the core (30) between a rectangular cross-section and a rhomboid cross-section.

17. The drilling assembly of claim 11, wherein a cross-section of the core (30) is selected from a group consisting of a regular polygonal cross-section, non-regular polygonal cross-section, and oval cross-section.

## Patentansprüche

1. Laserbohrverfahren zum Herstellen von Profillöchern (32) in einem Werkstück (26) unter Nutzung eines Hochleistungsfaserlasers, wobei das Verfahren die folgenden Schritte umfasst:
Emittieren einer Folge von Lichtstrahlimpulsen, die sich jeweils durch das Werkstück (26) fortpflanzen und eine Gaußsche Strahlform aufweisen, von einem nicht kreisförmigen Faserkern (30), wobei die Impulse jeweils einen Spitzenleistungsbereich aufweisen, der zwischen einem kW-Niveau und einem MW-Niveau variiert;
Fokussieren jedes Lichtstrahlimpulses auf das Werkstück (26) mit einer Impulsdauer von etwa 1 Millisekunde bis etwa 15 Millisekunden, um auf einer Eintrittsoberfläche (28) des Werkstücks (26) einen gewünschten nicht kreisförmigen Strahlfleck zu bilden, wobei eine Taille (54) des Strahls in einem vorgegebenen Abstand auslassseitig der Eintrittsoberfläche (28) innerhalb des Werkstücks (26) gebildet wird,
dadurch Bilden
eines konischen Diffusorabschnitts (36) eines Profillochs (32) mit einem nicht kreisförmigen Querschnitt (44) zwischen der Eintrittsoberfläche (28) des Werkstücks und der Taille (28) des Strahls, und
eines Zumessabschnitts (38) des Profillochs (32), der zwischen der Taille (54) des Strahls und einer Austrittsoberfläche (34) des Werkstücks (26) gebildet wird,
wobei sich der Zumessabschnitt (38) jedes Profillochs (32) in die Austrittsoberfläche (34) öffnet und im Wesentlichen einen gleichförmigen Durchmesser aufweist.

2. Laserbohrverfahren nach Anspruch 1, wobei das Profilloch (32) in einer einzigen Impulsbohroperation gebildet wird.

3. Laserbohrverfahren nach Anspruch 1, wobei das Profilloch (32) in mehreren Impulsbohroperationen gebildet wird.

4. Laserbohrverfahren nach Anspruch 1, das ferner umfasst:
unabhängiges Steuern einer gewünschten Strahlfleckgröße und eines Orts der Taille (54) entsprechend einer Brennebene der Strahlführungsoptik (60, 16, 18, 20, 22, 24).

5. Laserbohrverfahren nach Anspruch 1, das ferner umfasst:
gleichzeitiges Steuern einer gewünschten Strahlfleckgröße auf der Eintrittsoberfläche (28) und einer Brennebene der Strahlführungsoptik (60, 16, 18, 20, 22, 24) in einem vorgegebenen Abstand von der Eintrittsoberfläche (28).

6. Laserbohrverfahren nach Anspruch 5, wobei das gleichzeitige Steuern der Strahlfleckgröße und der Brennebene das Ändern von Dimensionen des Strahls auslassseitig des Kerns (30) enthält.

7. Laserbohrverfahren nach Anspruch 1, das ferner umfasst:
Verschieben des Werkstücks (26) und des Kerns (30) relativ zueinander, dadurch Bereitstellen eines gewünschten Musters von Profillöchern (32) in dem Werkstück (26).

8. Laserbohrverfahren nach Anspruch 1, das ferner umfasst:
Drehen des Kerns (30), um den nicht kreisförmigen Querschnitt in einen anderen nicht kreisförmigen Querschnitt umzuwandeln,
wobei einer der nicht kreisförmigen Querschnitte rechteckig ist und der andere rhombenförmig ist.

9. Laserbohrverfahren nach Anspruch 1, wobei die Impulse jeweils mit einer Spitzenleistung, die ein MW erreicht, mit einer Wiederholrate von bis zu etwa 100 Hz und mit einem Impulsdauerbereich, der zwischen etwa 1 Millisekunde und etwa 15 Millisekunden variiert, emittiert werden.

10. Laserbohrverfahren nach Anspruch 1, wobei die gewünschte Nichtkreisform einen ovalen Querschnitt oder einen vieleckigen Querschnitt enthält.

11. Laserbohranordnung (10), die dafür ausgelegt ist, in einem Werkstück (26) Profillöcher (32) herzustellen, wobei die Laserbohranordnung umfasst:
ein Hochleistungsfaserlasersystem (12), das dafür konfiguriert ist, Lichtstrahlimpulse jeweils mit einer Impulsdauer in einem Bereich zwischen etwa 1 Millisekunde und 15 Millisekunden und mit einem Spitzenleistungsbereich, der zwischen einem kW-Niveau und einem MW-Niveau variiert, zu erzeugen,
eine Faser (14) mit einem nicht kreisförmigen Kern (30), der mehrere Lichtstrahlimpulse entlang eines Wegs emittiert, wobei die Lichtstrahlimpulse jeweils im Wesentlichen eine Gaußsche Strahlform aufweisen; und
ein optisches System (16, 18, 20, 22, 24), das sich auslassseitig der Faser (14) befindet und dafür konfiguriert ist, die Lichtstrahlimpulse in Richtung des Werkstücks (26) zu führen, sodass sich die Lichtstrahlimpulse jeweils durch das Werkstück (26) fortpflanzen, wobei
die Gaußsche Strahlform auf der Eintrittsoberfläche (28) des Werkstücks (26) einen konischen Diffusorabschnitt (36) mit einem nicht kreisförmigen Bild des Kerns bildet und in einer Brennebene des optischen Systems (16, 18, 20, 22, 24) endet, während
die Gaußsche Strahlform zwischen der Brennebene und einer Austrittsoberfläche (34) des Werkstücks (26), auslassseitig von der Brennebene beabstandet, einen im Wesentlichen kreisförmigen Zumessabschnitt (38) des Profillochs (32) bildet, wobei die Laserbohranordnung dafür konfiguriert ist, das Profilloch (32) mit einer Rate innerhalb eines Bereichs, der von etwa 1 bis etwa 15 Millisekunden variiert, herzustellen, wobei das optische System (16, 18, 20, 22, 24) enthält:
eine Fokussierlinse (24), die so konfiguriert ist, dass sich die Brennebene in einem gewünschten Abstand zwischen der Eintrittsoberfläche (28) und der Austrittsoberfläche (34) befindet, wobei die Strahlen jeweils einen Ort einer Taille (54) der Gaußschen Strahlform aufweisen, der in der Brennebene liegt,
einen Kollimator (16), der sich auslassseitig des Kerns (30) befindet, und
eine Reihe beabstandeter Reflexionsspiegel (18, 20, 22) zwischen Kollimator (16) und Fokussierlinse (24).

12. Laserbohranordnung nach Anspruch 11, die ferner umfasst:
das Hochleistungsfaserlasersystem (12), das die Lichtstrahlimpulse erzeugt, die jeweils eine Wiederholrate von bis zu etwa 100 Hz aufweisen und bei einer Wellenlänge um 1060 nm zentriert sind.

13. Laserbohranordnung nach Anspruch 11, wobei der Kern (30) und das optische System (16, 18, 20, 22, 24) dafür konfiguriert sind, auf der Eintrittsoberfläche (28) eine gewünschte Dimension des Bilds und einen gewünschten Ort der Brennebene, der eine Länge des Diffusors (36) und der Zumessabschnitte (38) des Profillochs (32) definiert, bereitzustellen.

14. Bohranordnung nach Anspruch 11, wobei das optische System (60, 16, 18, 20, 22, 24) enthält:
ein Kollimatorsystem zwischen dem Kern (30) und dem Werkstück (26), wobei das Kollimatorsystem enthält:
zwei einlassseitige Linsen (60), die verschiebbar aneinander befestigt sind, und
eine Kollimationslinse (16) auslassseitig der zwei Linsen (60), wobei die zwei einlassseitigen Linsen (60) und die auslassseitige Kollimationslinse (16) relativ zueinander steuerbar verschiebbar sind, um das nicht kreisförmige Bild auf eine gewünschte Dimension und die Brennebene auf einen gewünschten Abstand zwischen der Eintrittsoberfläche (28) und der Austrittsoberfläche (34) einzustellen.

15. Bohranordnung nach Anspruch 14, die ferner umfasst:
einen Aktuator (64), der mit den Linsen (60) funktional verbunden ist, und
einen Controller, der mit Software versehen ist, die dafür funktional ist, die gewünschte Dimension des Bilds und den Ort der Brennebene zu bestimmen und an den Aktuator (64) ein Signal auszugeben, das dafür konfiguriert ist, die Linsen (60) auf einen gewünschten Abstand, der der gewünschten Dimension des Bilds und dem gewünschten Ort der Brennebene entspricht, relativ zueinander zu verschieben.

16. Bohranordnung nach Anspruch 11, die ferner umfasst:
einen Aktuator, der mit der Faser (14) funktional verbunden ist und dafür konfiguriert ist, die Faser (14) zu drehen, um das Bild des Kerns (30) zwischen einem rechteckigen Querschnitt und einem rhomenförmigen Querschnitt umzuwandeln.

17. Bohranordnung nach Anspruch 11, wobei ein Querschnitt des Kerns (30) aus einer Gruppe gewählt ist, die aus einem Querschnitt eines regelmäßigen Vielecks, aus einem Querschnitt eines unregelmäßigen Vielecks und aus einem ovalen Querschnitt besteht.

## Revendications

1. Procédé de perçage au laser pour produire des trous profilés (32) dans une pièce (26) à l'aide d'un laser à fibre de haute puissance,
comprenant les étapes suivantes :
l'émission d'une séquence d'impulsions de faisceau lumineux, chacune se propageant à travers la pièce (26) et ayant une forme de faisceau gaussien, à partir d'un noyau de fibre non circulaire (30), les impulsions ayant chacune une plage de puissance de crête variant entre un niveau kW et un niveau MW;
la focalisation de chaque impulsion du faisceau lumineux sur la pièce (26) avec une durée d'impulsion d'environ 1 milliseconde à environ 15 millisecondes de manière à former un spot de faisceau non circulaire souhaité sur une surface d'entrée (28) de la pièce (26), une taille (54) du faisceau étant formée à une distance prédéterminée en aval de la surface d'entrée (28) à l'intérieur de la pièce (26), formant ainsi
une partie diffuseur conique (36) d'un trou profilé (32) avec une section transversale non circulaire (44) entre la surface d'entrée (28) de la pièce et la taille (28) du faisceau, ainsi que
une section de mesure (38) du trou profilé (32), formée entre la taille (54) du faisceau et une surface de sortie (34) de la pièce (26),
la section de mesure (38) de chaque trou profilé (32) s'ouvrant dans la surface de sortie (34) et ayant un diamètre sensiblement uniforme.

2. Le procédé de perçage au laser selon la revendication 1, dans lequel le trou profilé (32) est formé au cours d'une seule opération de perçage par impulsions.

3. Le procédé de perçage au laser selon la revendication 1, dans lequel le trou profilé (32) est formé au cours de plusieurs opérations de perçage par impulsions.

4. Le procédé de perçage au laser selon la revendication 1, comprenant en outre
le contrôle indépendant d'une taille de spot de faisceau souhaitée et d'un emplacement de la taille (54) correspondant à un plan focal de l'optique de guidage du faisceau (60, 16, 18, 20, 22, 24).

5. Le procédé de perçage au laser selon la revendication 1, comprenant en outre
le contrôle simultané d'une taille de spot de faisceau souhaitée sur la surface d'entrée (28) et d'un plan focal de l'optique de guidage du faisceau (60, 16, 18, 20, 22, 24) à une distance prédéterminée de la surface d'entrée (28).

6. Le procédé de perçage au laser selon la revendication 5, dans lequel le contrôle simultané de la taille de spot du faisceau et du plan focal comprend la modification des dimensions du faisceau en aval du noyau (30).

7. Le procédé de perçage au laser selon la revendication 1, comprenant en outre
le déplacement de la pièce (26) et du noyau (30) l'un par rapport à l'autre, ce qui permet d'obtenir une configuration souhaitée des trous profilés (32) dans la pièce (26).

8. Le procédé de perçage au laser selon la revendication 1, comprenant en outre
la rotation du noyau (30) pour transformer la section transversale non circulaire en une autre section transversale non circulaire,
l'une des sections transversales non circulaires étant rectangulaire et l'autre rhomboïdale.

9. Le procédé de perçage au laser selon la revendication 1, dans lequel chacune des impulsions est émise à une puissance de crête atteignant un MW, à une fréquence de répétition allant jusqu'à environ 100 Hz et à une durée d'impulsion variant entre environ 1 milliseconde et environ 15 millisecondes.

10. Le procédé de perçage au laser selon la revendication 1, dans lequel la forme non circulaire souhaitée comprend une section transversale ovale ou polygonale.

11. Ensemble de perçage au laser (10) conçu pour produire des trous profilés (32) dans une pièce (26), comprenant :
un système laser à fibre haute puissance (12) configuré pour générer des impulsions de faisceau lumineux ayant chacune une durée d'impulsion comprise entre environ 1 milliseconde et environ 15 millisecondes et une plage de puissance de crête variant entre un niveau kW et un niveau MW,
une fibre (14) ayant un noyau non circulaire (30) émettant une pluralité d'impulsions de faisceau lumineux le long d'un chemin, les impulsions de faisceau lumineux ayant chacune essentiellement une forme de faisceau gaussien; et
un système optique (16, 18, 20, 22, 24) situé en aval de la fibre (14) et configuré pour guider les impulsions du faisceau lumineux vers la pièce (26) de sorte que les impulsions du faisceau lumineux se propagent chacune à travers la pièce (26),
la forme de faisceau gaussien forme une partie diffuseur conique (36) ayant une image non circulaire du noyau sur une surface d'entrée (28) de la pièce (26) et se terminant dans un plan focal du système optique (16, 18, 20, 22, 24), tandis que
la forme de faisceau gaussien forme essentiellement une section de mesure circulaire (38) du trou profilé (32) entre le plan focal et une surface de sortie (34) de la pièce (26) espacée en aval du plan focal,
l'ensemble de perçage au laser étant configuré pour produire le trou profilé (32) à une vitesse comprise dans une plage allant d'environ 1 à environ 15 millisecondes, le système optique (16, 18, 20, 22, 24) comprenant
une lentille de focalisation (24) configurée pour avoir le plan focal à une distance souhaitée entre les surfaces d'entrée (28) et de sortie (24), les faisceaux ayant chacun un emplacement de taille (54) de la forme de faisceau gaussien se trouvant dans le plan focal,
un collimateur (16) situé en aval du noyau (30), et une série de miroirs réfléchissants espacés (18, 20,22) entre le collimateur (16) et la lentille de focalisation (24) .

12. L'ensemble de perçage au laser selon la revendication 11, comprenant en outre
le système laser à fibre haute puissance (12) générant des impulsions de faisceau lumineux ayant chacune un taux de réplétion allant jusqu'à environ 100 Hz et une longueur d'onde centrée autour de 1060 nm.

13. L'ensemble de perçage au laser selon la revendication 11, dans lequel le noyau (30) et le système optique (16, 18, 20, 22, 24) sont configurés pour fournir une dimension souhaitée de l'image sur la surface d'entrée (28) et un emplacement souhaité du plan focal définissant une longueur du diffuseur (36) et des sections de mesure (38) du trou profilé (32).

14. L'ensemble de perçage selon la revendication 11, dans lequel le système optique (60, 16, 18, 20, 22, 24) comprend
un système de collimateur entre le noyau (30) et la pièce (26), le système de collimateur comprenant
deux lentilles (60) en amont fixées l'une à l'autre de manière déplaçable et
une lentille de collimation (16) en aval des deux lentilles (60),
les deux lentilles (60) en amont et la lentille de collimation en aval (16) pouvant être déplacées de manière contrôlée l'une par rapport à l'autre pour ajuster l'image non circulaire d'une dimension souhaitée et le plan focal à une distance souhaitée entre les surfaces d'entrée (28) et de sortie (34) .

15. L'ensemble de perçage selon la revendication 14, comprenant en outre
un actionneur (64) relié de manière opérationnelle aux lentilles (60) et
un contrôleur équipé d'un logiciel permettant de déterminer la dimension souhaitée de l'image et l'emplacement du plan focal et d'envoyer un signal à l'actionneur (64) configuré pour déplacer les lentilles (60) l'une par rapport à l'autre à une distance souhaitée correspondant à la dimension souhaitée de l'image et à l'emplacement du plan focal.

16. L'ensemble de perçage selon la revendication 11, comprenant en outre
un actionneur relié de manière opérationnelle à la fibre (14) et configuré pour faire tourner la fibre (14) de manière à transformer l'image du noyau (30) entre une section transversale rectangulaire et une section transversale rhomboïdale.

17. L'ensemble de perçage selon la revendication 11, dans lequel une section transversale du noyau (30) est choisie dans un groupe constitué d'une section transversale polygonale régulière, d'une section transversale polygonale non régulière et d'une section transversale ovale.
